# EUROPÄISCHE PATENTSCHRIFT

(11) **EP 1 426 785 B1**
(45) Veröffentlichungstag und Bekanntmachung des Hinweises auf die Patenterteilung: **01.06.2005**
(21) Anmeldenummer: 03024777.9
(22) Anmeldetag: 30.10.2003
(51) Int. Cl.: G01S 13/90

(54) **Verfahren und Einrichtung zur Kompensation von Phasenfehlern eines bi- oder multistatischen Synthetik-Apertur-Radarsystems**
Method and apparatus for compensating phase errors in bi- or multistatic synthetic aperture radar systems
Procédé et dispositif pour compenser d'erreurs de phase d'un radar à ouverture synthétique bi- ou multi-statique

(30) Priorität: 02.12.2002 DE 10256420
(43) Veröffentlichungstag der Anmeldung: 09.06.2004
(73) Patentinhaber: DLR Deutsches Zentrum für Luft- und Raumfahrt e.V., 51147 Köln (DE)
(72) Erfinder: Eineder, Michael, 81375 München (DE)
(74) Vertreter: von Kirschbaum, Albrecht, Dipl.-Ing.

(56) Entgegenhaltungen:
- EP-A- 1 065 518
- US-B1- 6 181 270
- EINEDER MICHAEL: "Ocillator Clock Drift Compensation in Bistatic Interferometric SAR" DIG INT GEOSCI REMOTE SENS SYMP (IGARSS); INTERNATIONAL GEOSCIENCE AND REMOTE SENSING SYMPOSIUM (IGARSS) 2003, Bd. 3, 2003, Seiten 1449-1451, XP002285962
- AUTERMAN J L: "Phase stability requirements for a bistatic SAR" 1984, NEW YORK, NY, USA, IEEE, USA, 1984, Seiten 48-52, XP002285963

## Beschreibung

Die Erfindung betrifft ein Verfahren zur Kompensation von Phasenfehlern im Nutzsignal eines interferometrischen bi- oder multistatischen Synthetik-Apertur-Radarsystems (SAR), dessen von mindestens einem flugzeug- oder satellitengetragenen Sender ausgesendete Signale nach Reflexion am Boden von zwei oder mehr ebenfalls flugzeug- oder satellitengetragenen, voneinander räumlich getrennten Empfängern als Echosignale empfangen werden, die unter Verwendung jeweils eines Lokaloszillators pro Empfänger kohärent demoduliert und danach über Funk zu einer am Boden gelegenen Auswertestation übertragen werden, in der dann durch gegenseitige Demodulation der übertragenen Echosignale das interferometrische Nutzsignal abgeleitet wird.

Die Erfindung betrifft auch ein Verfahren zur Durchführung des Verfahrens.

Bistatisches und multistatisches SAR beruhen auf Radarsendern und -empfängern, die räumlich getrennt auf mehreren verschiedenen Satelliten oder Flugzeugen montiert werden. Ein oder mehrere Sender senden als Signale Mikrowellenimpulse zur Erdoberfläche, an der sie reflektiert und dann als Echoimpulse von mehreren Empfängern aufgezeichnet werden. Die unterschiedliche Signallaufzeit zu den verschiedenen Empfängern bewirkt dort nach der kohärenten Demodulation Phasenunterschiede. Durch die präzise Auswertung dieser Phasenunterschiede können geometrische Eigenschaften des Streumediums auf der Erdoberfläche gemessen werden.

Typische Anwendungen eines solchen bistatischen bzw. multistatischen SAR-Systems sind die Erzeugung digitaler Geländemodelle (DGM) oder auch die Geschwindigkeitsmessung von Objekten auf der Erdoberfläche, beispielsweise von Meeresströmungen oder Fahrzeugen.

Bei der interferometrischen bistatischen Betriebsweise können die Empfangsfunktionen voneinander unabhängige Lokaloszillatoren benutzen. Demgemäß entstehen Nichtsynchronitäten der Lokaloszillatoren der verschiedenen Empfänger. Diese Lokaloszillator-Nichtsynchronitäten bewirken Phasenfehler im demodulierten interferometrischen SAR-Nutzsignal, was zu einem Auflösungsverlust, hohen Nebenzipfeln und einem Verschmieren der Bilddaten, aber auch zum Korrelationsverlust beim interferometrischen Vergleich führen kann.

Für die korrekte Auswertung der Phasendifferenz der empfangenen Echosignale zweier Empfänger müssen deren Lokaloszillatoren mehrere Minuten lang auf den Bruchteil eines Schwingungzyklus synchron arbeiten. Es ist deswegen eine extreme Stabilität oder eine andere Kompensationstechnik erforderlich, um Phasenfehlern im demodulierten interferometrischen SAR-Nutzsignal zu begegnen.

Wegen der hohen Frequenzen im Gigahertz-Bereich erfordert dies im ersten Fall Oszillatorstabilitäten im Grenzbereich des heute Machbaren. Eine erste Lösung besteht hierbei in der Anwendung von hochwertigen Atomuhren als Lokaloszillatoren, eine andere in der gegenseitigen aktiven Anbindung der Lokaloszillatoren verschiedener Empfänger.

Diese Lösungen bringen einen enormen technischen und Kostenaufwand mit sich, insbesondere bei einem satellitengestützten System. Darüber hinaus ist bis heute überhaupt noch nicht geklärt, ob das Problem der Synchronisation der Lokaloszillatoren der Empfänger im Weltraum mit den stabilsten Oszillatoren überhaupt lösbar wäre.

Aus US 6 181 270 B1 ist ein Verfahren zum Reduzieren von Phasenfehlern bei der Erzeugung von interferometrischen SAR-Bildern bekannt, bei dem in einer am Boden angeordneten Auswertestation ein monostatisches komplexes SAR-Bild und ein fehlerhaftes bistatisches SAR-Bild mit Phasenfehler empfangen werden. Diese beiden Bilder werden dann kreuzkorreliert und aus dem Kreuzkorrelationsergebnis wird ein Kompensationssignal erzeugt, das dem Datensatz des fehlerhaften bistatischen Bild zugeführt wird, um den Phasenfehler zu korrigieren.

Hierbei wird die Tatsache ausgenutzt, dass bei einem bistatischen System mit kooperierendem Sender und Empfänger auf einer ersten Plattform und einem davon getrennten reinen Empfänger auf einer anderen Plattform das Phasenzentrum der auf der ersten Plattform angeordneten Antenne wegen der Synchronität des Sende- und Empfangslokaloszillators ein gut fokussiertes Bild liefert. Beim davon getrennten, auf der anderen Plattform angeordneten Empfänger, der den mit Phasenfehlern behafteten Bilddatensatz liefert, wird das vom ersten Empfänger erlangte Bild als eine kohärente Referenz verwendet, um zu einer Schätzung und Beseitigung des relativen Phasenfehlers zwischen den beiden Bildern zu verhelfen.

Mit diesem bekannten Kompensationsverfahren, das auf einer Korrelation eines einigermaßen korrekten Bildes mit einem fehlerhaften Bild beruht, wird aber keine auf einem korrekten Frequenz- und Phasendifferenzergebnis der lokalen Oszillatoren beruhende Korrektur des interferometrischen Nutzsignals der sich auf getrennten Plattformen befindenden Empfänger eines bi- oder multistatischen SAR-Radarsystems erreicht, so dass die hiermit erzeugten interferometrischen SAR-Bilder nur als nachträglich bewerkstelligter Kompromiss angesehen werden können, da die die Phasenfehler verursachenden Fehlerquellen nicht gemessen und im interferometrischen Nutzsignal kompensiert werden.

Bistatische Radarsysteme sind auch bei verwandten Anwendungsfällen bekannt. Für diese gibt es zwar Lösungen, die allerdings nicht den strengen interferometrischen Anforderungen genügen.

Ein erster Anwendungsfall ist das bistatische Flugzeugerfassungsradar im militärischen Bereich. Hier liegt die Motivation darin, den Radarsender weit entfernt vom gewünschten Aufnahmegebiet zu halten, da dieser wegen den ausgesendeten Mikrowellenimpulsen und deren Erfassbarkeit leicht vom Gegner zu entdecken ist. Ein rein passiver Radarempfänger kann dagegen näher am interessierenden Aufnahmegebiet operieren, ohne entdeckt zu werden.

Auch bei dieser Anwendung eines bistatischen Radars besteht das Problem der Oszillatorsynchronisation zwischen dem Sender und dem örtlich davon getrennten Empfänger. Da aber hier nur einfache Intensitätsbilder, nicht aber geometrische Informationen aus der Phase zur Bildung eines interferometrischen Bildes gewonnen werden, sind die Anforderungen an die Oszillatorstabilität geringer und gelten nur für kurze Zeitspannen. Diese Anforderungen können mit der herkömmlichen Technik der Radar-Lokaloszillatoren erfüllt werden.

Ein zweiter Anwendungsfall ist das bistatische Küsten-Dopplerradar. Auch hier arbeiten Radarsender und -empfänger getrennt und müssen synchronisiert werden, damit die in der Dopplerfrequenz und damit in der Phase enthaltene Strömungsgeschwindigkeit gemessen werden kann. Da diese Strömungsgeschwindigkeiten relativ groß sind und sowohl Sender als auch Empfänger auf festem Boden stehen, ist das Synchronisationsproblem hier verhältnismäßig leicht zu lösen. Dazu wird beispielsweise das Synchronisationssignal aus dem direkten Sendepfad zwischen Sender und Empfänger abgeleitet. Neuerdings werden auch GPS-Signale als externe Referenz verwendet.

Die beim bistatischen Küsten-Dopplerradar eingesetzte Synchronisationstechnik durch einen direkten Sendepfad oder durch eine gemeinsame externe Signalquelle funktioniert bei bewegten Empfängern nicht, da die Relativbewegungen zwischen Sender und Empfänger zusätzliche Phasenstörungen erzeugen, was folglich eine zusätzliche hochgenaue Entfernungsmessung voraussetzt. Auch kann der Sender nicht in allen Fällen so modifiziert werden, dass er dieses Signal aussendet. Ähnliches gilt für die Verwendung von externen Signalquellen, wie z.B. GPS-Satelliten.

Der Erfindung liegt die Aufgabe zu Grunde, für zukünftige bistatische und multistatische interferometrische Synthetik-Apertur-Radarsysteme (SAR) die Nichtsynchronität der Empfänger-Lokaloszillatoren ohne Einsatz externer Synchronisiersignalquellen so auszugleichen, dass einerseits verhältnismäßig wenig aufwendige, herkömmliche Radar-Oszillatoren in den SAR-Empfängern verwendet werden können, dass aber andererseits trotzdem die Phasenfehler der in den Empfängern mit Hilfe eines Lokaloszillators demodulierten Echosignale sicher und zuverlässig ermittelt werden, so dass einwandfreie interferometrische SAR-Bilder und Messungen erzielt werden. Es soll auch eine zweckmäßige und vorteilhafte Einrichtung zur Durchführung dieses Verfahrens zur Phasenfehlerbeseitigung angegeben werden.

Gemäß der Erfindung, die sich auf ein Verfahren der eingangs genannten Art bezieht, wird diese Aufgabe dadurch gelöst, dass von jedem der Empfänger dessen lokale Oszillatorfrequenz über eine Sendeantenne an jeweils alle anderen Empfänger ausgesendet wird, dass in jedem der Empfänger die lokalen Oszillatorfrequenzen aller anderen Empfänger empfangen und kohärent unter Verwendung jeweils der eigenen Lokaloszillatorfrequenz zur Bildung von Differenzfrequenzsignalen demoduliert werden, dass von den Empfängern zusätzlich zu den jeweiligen demodulierten Echosignalen auch die bei ihnen gebildeten Differenzfrequenzsignale zu der Auswertestation übertragen werden und dass in der Auswertestation die nach der Übertragung empfangenen Differenzfrequenzsignale der Empfänger gegenseitig demoduliert werden und jeweils ein Phasenfehlersignal ergeben, das zur Kompensation des Phasenfehlers des die gleichen Empfänger betreffenden interferometrischen Nutzsignals herangezogen wird. Durch das Verfahren nach der Erfindung werden sowohl die Phasenstörungen durch Oszillatorschwankungen als auch die Phasenstörungen durch den wechselnden Abstand der die Empfänger tragenden Flugzeuge bzw. Satelliten kompensiert. Externe Signalquellen werden beim Verfahren nach der Erfindung dazu nicht benötigt.

In zweckmäßiger Weise strahlen die Empfänger ihre jeweilige Lokaloszillatorfrequenz über eine zusätzliche Antenne aus und empfangen die Ldkaloszillatorfrequenzen der jeweils anderen Empfänger über eine ohnehin vorhandene Radarantenne oder durch eine weitere zusätzliche Antenne.

Zur Realisierung des Verfahrens nach der Erfindung müssten dann zusätzliche Antennen an den Empfängern zur Aussendung ihrer lokalen Oszillatorfrequenzen für die spätere Kompensation angebracht werden. Der Empfang der Oszillatorfrequenzen von den Partnerempfängern erfolgt durch die ohnehin vorhandene Radarantenne oder durch eventuell zusätzliche Antennen.

In den Empfängern wird dann eine kohärente Demodulation und Aufzeichnung für die spätere Kompensation vorgenommen. Schließlich erfolgt in der am Boden angeordneten Auswertestation die Auswertung und Kompensation der Phasenstörungen durch Filterung und kreuzweise Demodulation der aufgezeichneten und über Funk übertragenen Signale. Dieser letztgenannte Verarbeitungsschritt erfolgt am besten durch einen Computer.

In vorteilhafter Weise werden in den Empfängern sowohl die jeweiligen, dort demodulierten Echosignale als auch die bei ihnen gebildeten Differenzfrequenzsignale vor ihrer Übertragung zu der am Boden befindliche Auswertestation zwischengespeichert.

Eine vorteilhafte Realisierung der Erfindung besteht darin, dass in einem Empfänger die Lokaloszillatorfrequenzen der anderen Empfänger mit einer eigenen Antenne aufgenommen sowie getrennt von den Echosignalen dann demoduliert und zwischengespeichert und anschließend zur Auswertestation übertragen werden.

Eine Variante dazu besteht darin, dass in einem Empfänger die Lokaloszillatorfrequenzen der anderen Empfänger mit den Echosignalen dieser anderen Empfänger gemischt werden und dann nach einer Demodulation zwischengespeichert werden und dass in der Auswertestation vor der eigentlichen Phasenfehlerkompensation die Differenzfrequenzsignale und die demodulierten Echosignale durch Filterung, vorzugsweise Softwarefilterung, rekonstruiert werden.

Die Lokaloszillatorfrequenzen können vor der Übertragung zur Auswertestation geteilt oder heruntergemischt werden und in der Auswertestation werden dann vor der eigentlichen Phasenfehlerkompensation die dort bekannten Teilerfaktoren bzw.

Mischfrequenzen wieder rückgängig gemacht. Diese Teilung bzw. Heruntermischung hat keine Auswirkung auf das Gesamtprinzip, wohl aber auf die Genauigkeit der Kompensation. Aus Kostengründen bzw. zur besseren Trennung der Signale kann sie notwendig werden.

Eine zweckmäßige Weiterbildung des Verfahrens nach der Erfindung zeichnet sich dadurch aus, dass die sich durch eine Abstandsänderung zwischen zwei Empfängern ergebende und damit einer Geschwindigkeit entsprechende, zusätzliche Frequenz in den beiden Differenzfrequenzsignalen dieser beiden Empfänger bei der betreffenden Auswertung in der Auswertestation vor der eigentlichen Phasenkompensation auf Grund der gegenseitigen Demodulation zwar entfällt, aber in der Auswertestation als weiteres Nutzsignal für eine spätere Verrechnung der interferometrischen Nutzsignale verwendet wird, da die Geschwindigkeit ein wichtiger Parameter für die Messung der sogenannten Basislinie, d.h. des Abstandes der beiden betreffenden Empfänger, ist.

Im bi- oder multistatischen Synthetik-Apertur-Radarsystem (SAR) kann der Boden über einen Bereich mittels eines auf einem Flugzeug oder Satelliten angeordneten, nicht-kooperativen Senders ausgeleuchtet werden und die Echosignale werden dann mittels auf verschiedenen anderen Flugzeugen oder anderen Satelliten angeordneten Empfängern empfangen.

Im bi- oder multistatischen Synthetik-Apertur-Radarsystem (SAR) kann aber der Boden auch über einen Bereich mittels der Sender von auf verschiedenen Flugzeugen oder Satelliten angeordneten Sender/Empfängern ausgeleuchtet werden und die Echosignale werden mittels der Empfänger dieser Sender/Empfänger empfangen und zwar derart, dass jeder Sender/Empfänger jeweils diejenigen Echosignale empfängt, die von den Sendesignalen anderer Sender/Empfänger herrühren.

Eine weitere Alternative besteht darin, dass im bi- oder multistatischen Synthetik-Apertur-Radarsystem (SAR) der Boden über einen Bereich mittels eines kooperativen Senders eines auf einem Flugzeug oder Satelliten angeordneten Sender/Empfängers ausgeleuchtet wird und dass die Echosignale mittels des Empfänger dieses Sender/Empfängers und einem oder mehreren jeweils auf einem anderen Flugzeug oder anderen Satelliten angeordneten reinen Empfänger/n empfangen werden.

Eine zweckmäßige und vorteilhafte Einrichtung zur Durchführung des Verfahrens nach der Erfindung ist dadurch gekennzeichnet, dass die flugzeug- oder satellitengetragenen Empfänger des Synthetik-Apertur-Radarsystems (SAR) jeweils außer einer Radarantenne zum Empfang von Echosignalen und von Lokaloszillatorfrequenzen eines oder mehrerer anderer Empfänger noch eine Antenne zum Ausstrahlen jeweils ihrer eigenen Lokaloszillatorfrequenz aufweisen, dass die Empfänger jeweils einen Demodulator-Mischer enthalten, dessen eines Eingangssignal zusammen das von der Radarantenne des betreffenden Empfängers aufgenommene Echosignal und die empfangene Lokaloszillatorfrequenz eines anderen Empfängers ist und dessen anderes Eingangssignal die Lokaloszillatorfrequenz des eigenen Empfängers ist, dass am Ausgang des Demodulator-Mischers jedes Empfängers ein Analog/Digital-Wandler zum Digitalisieren der ins Basisband umgesetzten Differenzfrequenzen einerseits zwischen der Echosignalfrequenz und der Lokaloszillatorfrequenz des betreffenden Empfängers und andererseits zwischen der über die zusätzliche Antenne übertragenen Lokaloszillatorfrequenz des anderen Empfängers und der Lokaloszillatorfrequenz des betreffenden Empfängers angeschlossen ist, dass in den Empfängern jeweils ein Zwischenspeicher zur Speicherung der digitalen Differenzfrequenzsignale und ein Funksender zur Aussendung der zwischengespeicherten Differenzfrequenzsignale zu einer auf dem Boden angeordneten Auswertestation über eine Abwärts-Funkstrecke vorgesehen ist, dass die Auswertestation mit einem Funkempfänger zum Empfangen dieser über die Abwärts-Funkstrecke von den Empfängern übertragenen, digitalen Differenzfrequenzsignale ausgestattet ist, dass in einem Phasenfehler-Kompensationssystem der Auswertestation in jedem einem Empfänger zugeordneten Pfad ein Filter zum Ausfiltern des die Lokaloszillatorfrequenzen der Empfänger betreffenden Differenzfrequenzsignals vorgesehen ist, dass zwischen den Filtern zum Mischen der betreffenden Differenzfrequenzsignale mit seinen beiden Eingängen ein Demodulator-Mischer angeordnet ist, dessen Ausgang mit einem Eingang eines Kompensationsmischers verbunden ist, dessen anderer Eingang mit dem Ausgang eines Nutzsignal-Mischers verbunden ist, dessen Eingänge zum Zuführen der Nutzsignalanteile jeweils an einen Pfad des Phasenfehler-Kompensationssystems vor den Filtern angeschlossen sind, und dass das Ausgangssignal des Kompensationsmischers das phasenfehlerkompensierte interferometrische Nutzsignal ist.

Vorteilhafte Weiterbildungen, zusätzliche Merkmale und Ausführungen dieser Einrichtung zur Durchführung des Verfahrens nach der Erfindung sind in den sich auf den Patentanspruch 11 unmittelbar oder mittelbar rückbeziehenden Ansprüchen 12 bis 15 angegeben.

Vorteilhafte und zweckmäßige Ausführungsbeispiele von Einrichtungen zur Durchführung des Verfahrens nach der Erfindung werden nachfolgend anhand von Zeichnungen erläutert. Es zeigen:
- Fig.1: eine schematisch dargestellte SAR-System-Gruppierung, bestehend aus einem nicht-kooperativen Sender und zwei reinen Empfängern,
- Fig.2: das Prinzipblockschaltbild einer Einrichtung zur Phasenfehlerkompensation des interferometrischen Nutzsignals der in Fig.1 dargestellten SAR-System-Gruppierung, wobei der Weg des interferometrischen Nutzsignals gestrichelt und der Weg des Phasenkompensationssignals strichpunktiert markiert ist,
- Fig.3: eine schematisch dargestellte SAR-System-Gruppierung, bestehend aus zwei vollständigen, satellitengetragenen Sender/Empfängern im Orbit,
- Fig.4: das Prinzipblockschaltbild einer Einrichtung zur Phasenfehlerkompensation des interferometrischen Nutzsignals der in Fig.3 dargestellten SAR-System-Gruppierung, wobei wiederum der Weg des interferometrischen Nutzsignals gestrichelt und der Weg des Phasenkompensationssignals strichpunktiert markiert ist,
- Fig.5: eine schematisch dargestellte SAR-System-Gruppierung, bestehend aus einem vollständigen, satellitengetragenen Sender/Empfänger und einem getrennten reinen Empfänger im Orbit, und
- Fig.6: das Prinzipschaltbild einer Einrichtung zur Phasenfehlerkompensation des interferometrischen Nutzsignals der in Fig.5 dargestellten SAR-System- Gruppierung, wobei auch hier der Weg des interferometrischen Nutzsignals gestrichelt und der Weg des Phasenkompensationssignals strichpunktiert markiert ist.

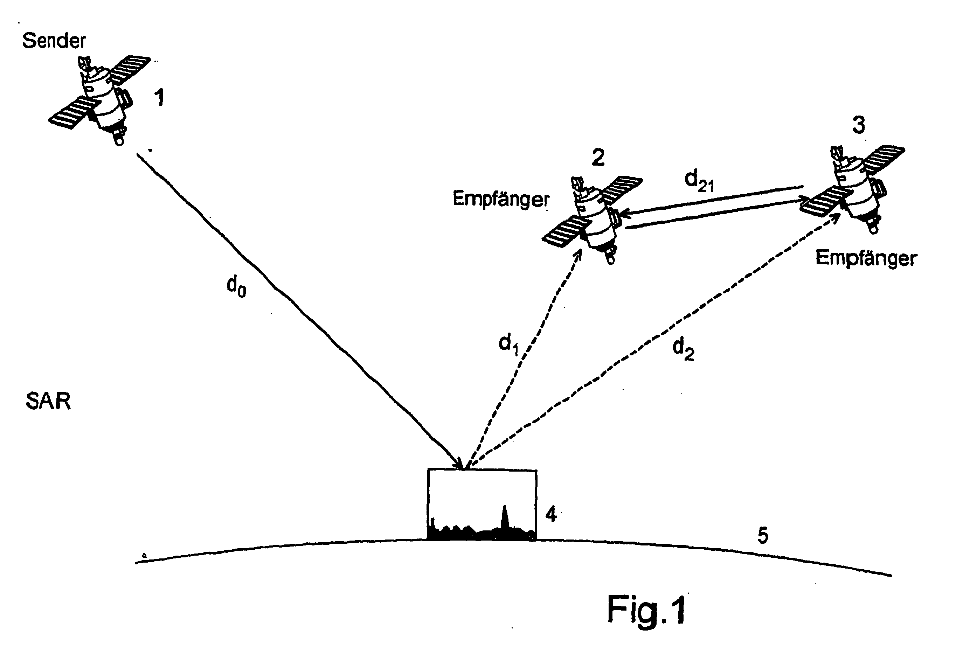

Bei der in Fig.1 als Ausführungsbeispiel dargestellten SAR-System-Konfiguration sind ein satellitengetragener Sender 1 und zwei jeweils von einem anderen Satelliten getragene Empfänger 2 und 3 vorgesehen. Bei dieser Konfiguration wird nicht vorausgesetzt, dass der Sender 1 zur Phasensynchronisation beiträgt oder die vom Sender 1 selbst aufgezeichneten Radardaten überhaupt verwendet werden. Statt dessen verwenden die Empfänger 2 und 3 den Sender 1 lediglich als Radarbeleuchter.

Der Radarsender 1 strahlt die von seinem lokalen Oszillator erzeugten Mikrowellenimpulse auf einen Bereich 4 der Erdoberfläche 5. Von dort werden die Mikrowellenimpulse reflektiert und dann von den räumlich getrennten Empfängern 2 und 3 empfangen. Prinzipiell können im Raum auch mehr als die beiden Empfänger 2 und 3 vorhanden sein.

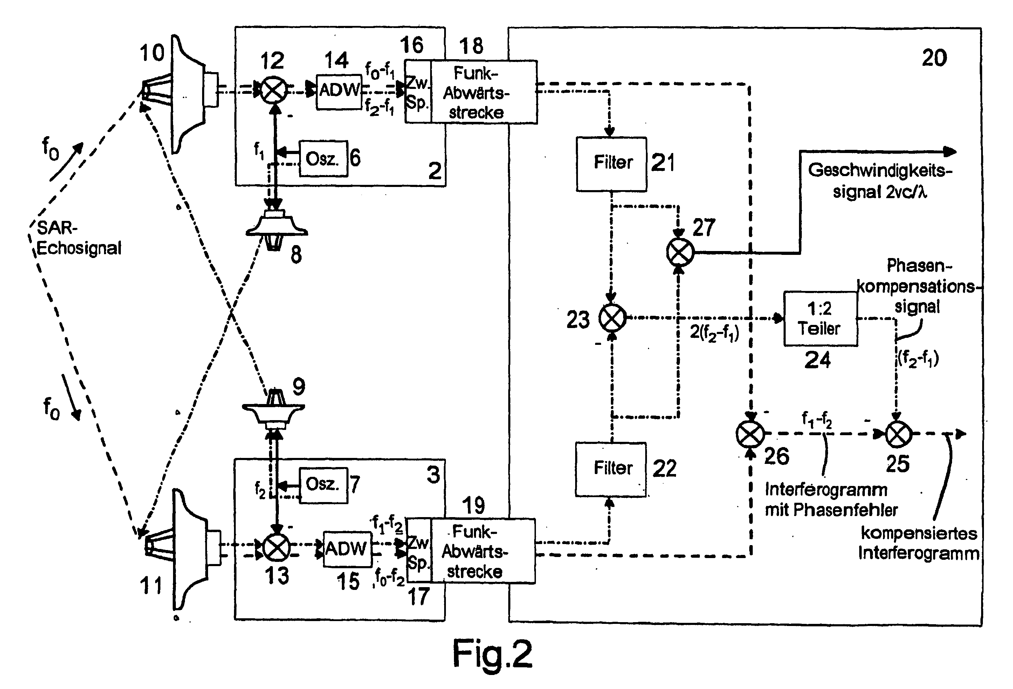

Wie im Einzelnen Fig.2 zeigt, werden beim Empfang in jedem der beiden Empfänger 2 und 3 die auf den Reflexionen der Mikrowellenimpulse des Senders (Lokaloszillatorfrequenz des Senders ist f₀) beruhenden Echosignale kohärent mit der Frequenz f₁ bzw. f₂ des jeweiligen Lokaloszillators 6 bzw. 7 des Empfängers 2 bzw. 3 demoduliert. Dadurch entsteht neben dem gewünschten Nutzsignal, nämlich der durch die Entfernungen d₀+d₁ und d₀+d₂ verursachten Phasenverschiebung, eine zusätzliche Phasenstörung, die durch die Differenz der Oszillatorfrequenzen (f₀-f₁) und (f₀-f₂) hervorgerufen wird, wobei f₀ die Lokaloszillatorfrequenz des Senders 1, f₁ die Lokaloszillatorfrequenz des Empfängers 2 und f₂ die Lokaloszillatorfrequenz des Empfängers 3 ist. Bildet man die interferometrische Differenzphase der empfangenen Echosignale der beiden Empfänger 2 und 3, so eliminiert sich die Oszillatorfrequenz f₀ des Senders 1 und die Differenzfrequenz (f₁-f₂) der beiden Empfänger 2 und 3 bleibt weiterhin als Störung im Interferogramm. Für das interferometrische Nutzsignal wird eine Phasengenauigkeit in der Größenordnung von einem Grad über eine Dauer von 100 Sekunden gefordert.

Für die Lokaloszillatoren 6 und 7 der beiden Empfänger 2 und 3 bedeutet das bei einer Mikrowellenfrequenz von z.B. 9 GHz (X-Band-Radar) eine Stabilitätsanforderung von etwa 3 x 10⁻¹⁵. Dies ist etwa die Genauigkeit der derzeit besten für Zeitstandards oder für Navigationszwecke eingesetzten Atomuhren. Solche Uhren basieren auf Cäsium- bzw. Wasserstoff-Masern und können im Weltraum bzw. in einem Flugzeug kaum betrieben werden.

Wie das in Fig.2 in einem Blockschaltbild dargestellte diesbezügliche Ausführungsbeispiel einer Einrichtung zur Durchführung des Verfahrens nach der Erfindung zeigt, sind hierbei keine Spezialuhren erforderlich. Statt dessen sind an den Empfängern 2 und 3 kleine Sendeantennen 8 bzw. 9 angebracht, mit denen die Empfänger 2 bzw. 3 ihre eigenen Lokaloszillatorfrequenzen f₁ bzw. f₂, die in den Lokaloszillatoren 6 bzw. 7 erzeugt werden, an den jeweils anderen Empfänger 3 bzw. 2 abstrahlen. Diese empfangen die Frequenzen f₁ bzw. f₂ mit einer bereits vorhandenen Radarantenne 10 bzw. 11 oder mittels zweier in Fig.2 nicht dargestellter kleiner Zusatzantennen und demodulieren sie mit ihrer eigenen Lokaloszillatorfrequenz f₁ bzw. f₂.

Dazu ist in jedem Empfänger 2 und 3 ein Demodulator-Mischer 12 bzw. 13 in den Hochfrequenz-Empfangszug eingeschaltet. In dem in Fig.2 dargestellten Fall empfängt der Empfänger 3 das Lokaloszillatorsignal f₁ vom Empfänger 2 und demoduliert es mit der Frequenz f₂ seines Lokaloszillators 7. Es entsteht dadurch die Differenzfrequenz (f₁-f₂) der beiden Lokaloszillatoren 6 und 7.

Im Empfänger 2 erfolgt der Vorgang genau spiegelbildlich, d.h. der Empfänger 2 empfängt das Lokaloszillatorsignal f₂ vom Empfänger 3 und demoduliert es mit der Frequenz f₁ seines Lokaloszillators 6. Es entsteht dadurch die Differenzfrequenz (f₂-f₁) der beiden Lokaloszillatoren 7 und 6.

Nach der Mischung im Demodulator-Mischer 12 des Empfängers 2 bzw. nach der Mischung im Demodulator-Mischer 13 des Empfängers 3 liegen also Differenzfrequenzen (f₀-f₁) und (f₂-f₁) im Empfänger 2 und Differenzfrequenzen (f₀-f₂) und (f₁-f₂) im Empfänger 3 jeweils im Basisband vor und werden durch Analog/Digital-Wandler 14 bzw. 15 digitalisiert.

Nach einer Speicherung der digitalisierten gemischten Differenzfrequenzsignale der beiden Empfänger 2 und 3 in einem Zwischenspeicher 16 bzw. 17 erfolgt über eine Abwärts-Funkstrecke 18 bzw. 19 eine Funk-Übertragung dieser Signale zu einer ein Phasenkompensationssystem enthaltenden Auswertestation 20 am Boden. Dort werden die Phasenstörungen vollständig eliminiert.

Mittels zweier Filter 21 und 22, die vorzugsweise als in Form von Softwarefiltern ausgebildete Matched-Filter realisiert sind, werden im Phasenkompensationssystem der Auswertestation 20 die beiden Differenzsignale (f₂-f₁) und (f₁-f₂) aus dem über die Abwärts-Funkstrecken 18 bzw. 19 von den Empfängern 2 bzw. 3 übertragenen Gesamtsignalgemischspektrum ausgefiltert, was relativ problemlos ist, da es sich bei den auszufilternden Signalen um nahezu perfekte Sinusschwingungen handelt.

In die beiden Nutzsignalwege könnten im Falle, dass dort Störungen auftreten, Notch-Filter eingeschaltet werden, um diese Störungen zu eliminieren. Diese in Fig.2 dargestellte Lösung zur Übertragung und Aufzeichnung der Oszillatorfrequenzen ist wegen eines geringeren Hardwareaufwandes einfacher als eine andere Lösung, die darin besteht, die kalibrierenden Lokaloszillatordifferenzsignale der beiden Empfänger getrennt unter Verwendung eigener Antennen aufzunehmen sowie getrennt zu demodulieren und aufzuzeichnen.

Mit einem Demodulator-Mischer 23 wird das Differenzsignal (f₂-f₁) mit dem Differenzsignal (f₁-f₂) demoduliert und es entsteht das doppelte Differenzsignal 2(f₂-f₁), das dann über einen 1:2-Frequenzteiler 24 als Phasenfehlersignal (f₂-f₁) einem Eingang eines Kompensationsmischers 25 zugeführt wird. Das zweite Eingangssignal dieses Kompensationsmischers 25 ist das noch phasenfehlerbelastete interferometrische Nutzsignal (f₁-f₂), das über einen Nutzsignal-Mischer 26 aus den über Funk übertragenen Nutzsignalanteilen gewonnen wird. Am Ausgang des Kompensationsmischers 25 wird dann das phasenmäßig kompensierte interferometrische Nutzsignal abgenommen.

Von Bedeutung ist, dass eine Abstandsänderung mit der Geschwindigkeit v zwischen den beiden satellitengetragenen Empfängern 2 und 3 zwar eine zusätzliche Frequenz f₁₂ = vc/λ (c = Lichtgeschwindigkeit, λ = Wellenlänge) in den beiden Differenzsignalen erzeugt. Durch die gegenseitige Demodulation im Phasenkompensationssystem der Auswertestation 20 entfällt dieser Term aber wieder. Die Anordnung ist also unempfindlich gegenüber Entfernungsschwankungen. Der Einfachheit halber ist dieser Sachverhalt in Fig.2 nicht berücksichtigt.

Dagegen kann die Geschwindigkeit v als weiteres Nutzsignal für die spätere Verrechnung der interferometrischen Nutzdaten verwendet werden und wird aus den ausgefilterten Differenzsignalen (f₂-f₁) und (f₁-f₂) mittels eines weiteren Demodulator-Mischers 27 demoduliert. Diese Geschwindigkeit v ist ein wichtiger Parameter für die Messung der sogenannten Basislinie, d.h. des Abstandes d₂₁ (Fig.1) der beiden satellitengetragenen Empfänger 2 und 3.

Manchmal kann es erforderlich sein, die Lokaloszillatorfrequenzen f₁ und f₂ der Empfänger 2 bzw. 3 vor der Übertragung zu teilen (f₁' = f₁/k bzw. f₂' = f₂/k) oder herunterzumischen (f₁' = f₁ - f₁/k bzw. f₂' = f₂ - f₂/k). Dies hat keine Auswirkung auf das Gesamtprinzip, wohl aber auf die Genauigkeit der Kompensation. Bei der Phasenkompensation im Phasenkompensationssystem der Auswertestation 20 müssen dann die bekannten Teilerfaktoren bzw. Mischfrequenzen in der Software wieder rückgängig gemacht werden.

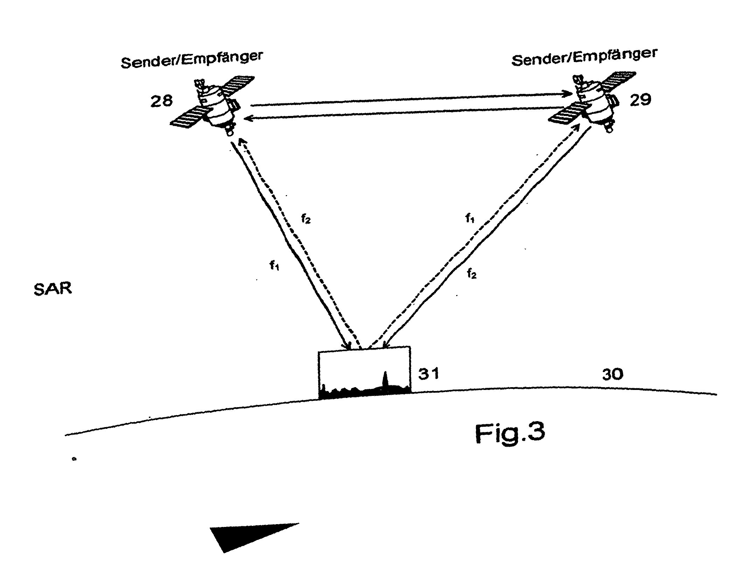

Die in Fig.3 gezeigte Konstellation unterscheidet sich von der Anordnung in Fig.1 dadurch, dass kein externer reiner Sender auf einem Satelliten benutzt wird. Anstatt dessen senden und empfangen zwei baugleiche satellitengetragene Sender/Empfänger 28 und 29 kooperativ. Jeder der beiden sich im Orbit befindenden Sender/Empfänger 28 und 29 sendet dabei, empfängt aber als Echosignale jeweils die an der Erdoberfläche 30 im Bereich 31 reflektierten Signale des anderen Sende/Empfängers 29 bzw. 28.

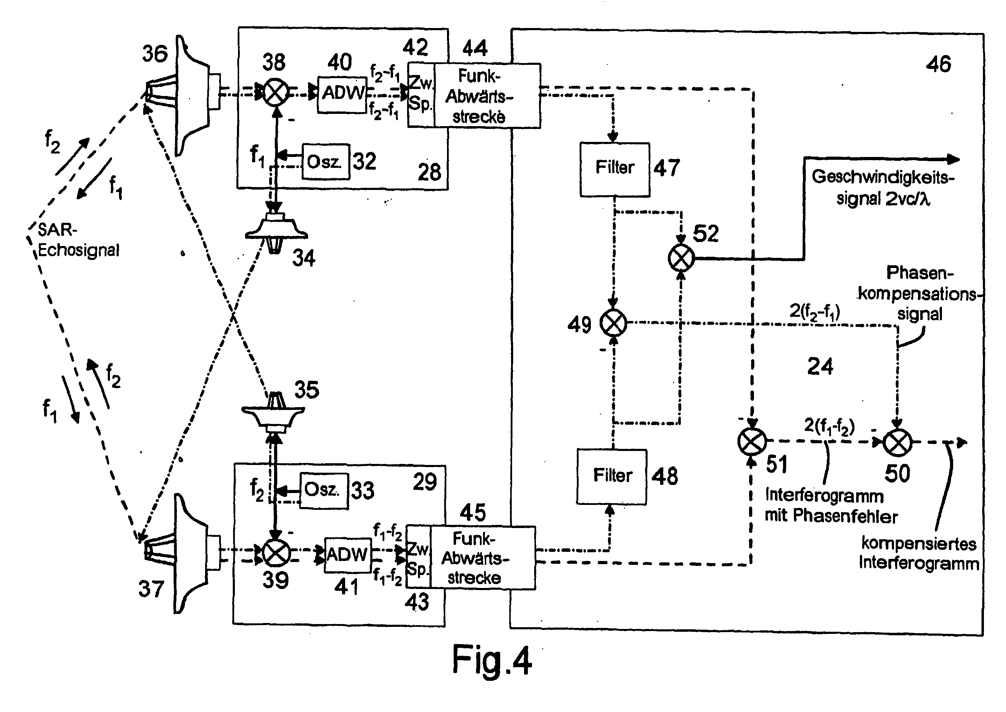

Wie im Einzelnen die zur Konstellation von Fig.3 gehörende Fig.4 in einem Blockschaltbild zeigt, werden beim Empfang im Sender/Empfänger 28 die auf den Reflexionen der ausgesendeten Mikrowellenimpulse des anderen Sender/Empfängers 29 (Lokaloszillatorfrequenz dessen Senders ist f₂) beruhenden Echosignale kohärent mit der Frequenz f₁ des Lokaloszillators 32 des Sender/Empfängers 28 demoduliert.

Entsprechend werden beim Empfang im Sender/Empfänger 29 die auf den Reflexionen der ausgesendeten Mikrowellenimpulse des anderen Sender/Empfängers 28 (Lokaloszillatorfrequenz dessen Senders ist f₁) beruhenden Echosignale kohärent mit der Frequenz f₂ des Lokaloszillators 33 des Sender/Empfängers 29 demoduliert. Dadurch entsteht neben dem gewünschten Nutzsignal, nämlich der interferometrischen Phasenverschiebung, eine zusätzliche Phasenstörung, die durch die Differenz der Lokaloszillatorfrequenzen f₁ und f₂ hervorgerufen wird.

An den Empfängern der Sender/Empfänger 28 und 29 sind auch in diesem Ausführungsbeispiel kleine Sendeantennen 34 bzw. 35 angebracht, mit denen die Empfänger der Sender/Empfänger 28 bzw. 29 ihre eigenen Lokaloszillatorfrequenzen f₁ bzw. f₂, die in den Lokaloszillatoren 32 bzw. 33 erzeugt werden, an den jeweils anderen Sender/Empfänger 29 bzw. 28 abstrahlen.

Diese empfangen die Frequenzen f₁ bzw. f₂ mit einer bereits vorhandenen Radarantenne 36 bzw. 37 oder mittels zweier in Fig.4 nicht dargestellter kleiner Zusatzantennen und demodulieren sie mit ihrer eigenen Lokaloszillatorfrequenz f₁ bzw. f₂. Dazu ist in jedem Empfänger der Sender/Empfänger 28 und 29 ein Demodulator-Mischer 38 bzw. 39 in den Hochfrequenz-Empfangszug eingeschaltet.

In dem in Fig.4 dargestellten Fall empfängt der Empfänger des Sender/Empfängers 29 das Lokaloszillatorsignal f₁ vom Empfänger 28 und demoduliert es mit der Frequenz f₂ seines Lokaloszillators 33. Es entsteht dadurch die Differenzfrequenz (f₁-f₂) der beiden Lokaloszillatoren 32 und 33.

Im Empfänger des Sender/Empfängers 28 erfolgt der Vorgang genau spiegelbildlich, d.h. der Empfänger des Sender/Empfängers 28 empfängt das Lokaloszillatorsignal f₂ vom Empfänger des Sender/Empfängers 29 und demoduliert es mit der Frequenz f₁ seines Lokaloszillators 32. Es entsteht dadurch die Differenzfrequenz (f₂-f₁) der beiden Lokaloszillatoren 33 und 32. Nach der Mischung im Demodulator-Mischer 38 des Empfängers des Sender/Empfänger 28 bzw. nach der Mischung im Demodulator-Mischer 39 des Empfängers des Sender/Empfängers 29 liegen also Differenzfrequenzen (f₂-f₁) und (f₂-f₁) im Empfänger des Sender/Empfängers 28 und Differenzfrequenzen (f₁-f₂) und (f₁-f₂) im Empfänger des Sender/Empfängers 29 jeweils im Basisband vor und werden durch Analog/Digital-Wandler 40 bzw. 41 digitalisiert.

Nach einer Speicherung der digitalisierten gemischten Differenzfrequenzsignale der beiden Sender/Empfänger 28 und 29 in einem Zwischenspeicher 42 bzw. 43 erfolgt über eine Abwärts-Funkstrecke 44 bzw. 45 eine Funk-Übertragung dieser Signale zu einer ein Phasenkompensationssystem enthaltenden Auswertestation 46 am Boden. Dort werden die Phasenstörungen vollständig eliminiert.

Mittels zweier Filter 47 und 48, die vorzugsweise als in Form von Softwarefiltern ausgebildete Matched-Filter realisiert sind, werden im Phasenkompensationssystem der Auswertestation 46 die beiden Differenzsignale (f₂-f₁) und (f₁-f₂) aus dem über die Abwärts-Funkstrecken 44 bzw. 45 von den Sender/Empfängern 28 bzw. 29 übertragenen Gesamtsignalgemischspektrum ausgefiltert, was relativ problemlos ist, da es sich bei den auszufilternden Signalen um nahezu perfekte Sinusschwingungen handelt. In die beiden Nutzsignalwege könnten im Falle, dass dort Störungen auftreten, Notch-Filter eingeschaltet werden, um diese Störungen zu eliminieren.

Mit einem Demodulator-Mischer 49 wird das Differenzsignal (f₂-f₁) mit dem Differenzsignal (f₁-f₂) demoduliert und es entsteht das doppelte Differenzsignal 2(f₂-f₁), das dann als Phasenfehlersignal einem Eingang eines Kompensationsmischers 50 zugeführt wird. Das zweite Eingangssignal dieses Kompensationsmischers 50 ist das noch phasenfehlerbelastete interferometrische Nutzsignal 2(f₁-f₂), das über einen Nutzsignal-Mischer 51 aus den über Funk übertragenen Nutzsignalanteilen gewonnen wird. Am Ausgang des Kompensationsmischers 50 wird dann in der Auswertestation 46 das phasenmäßig kompensierte interferometrische Nutzsignal abgenommen.

Auch in diesem Ausführungsbeispiel kann die durch Abstandsänderungen zwischen den beiden Sender/Empfängern 28 und 29 verursachte Geschwindigkeit v als weiteres Nutzsignal für die spätere Verrechnung der interferometrischen Nutzdaten verwendet werden und wird aus den ausgefilterten Differenzsignalen (f₂-f₁) und (f₁-f₂) mittels eines weiteren Demodulator-Mischers 52 demoduliert. Diese Geschwindigkeit v ist ein wichtiger Parameter für die Messung der sogenannten Basislinie, d.h. des Abstandes der beiden satellitengetragenen Sender/Empfängern 28 und 29.

Auch hier kann es erforderlich sein, die Lokaloszillatorfrequenzen f₁ und f₂ der Sender/Empfänger 28 bzw. 29 vor der Übertragung zu teilen (f₁' = f₁/k bzw. f₂' = f₂/k) oder herunterzumischen (f₁' = f₁ - f₁/k bzw. f₂' = f₂ - f₂/k). Dies hat keine Auswirkung auf das Gesamtprinzip, dagegen auf die Genauigkeit der Kompensation. Bei der Phasenkompensation im Phasenkompensationssystem der Auswertestation 46 müssen dann die bekannten Teilerfaktoren bzw. Mischfrequenzen in der Software wieder rückgängig gemacht werden.

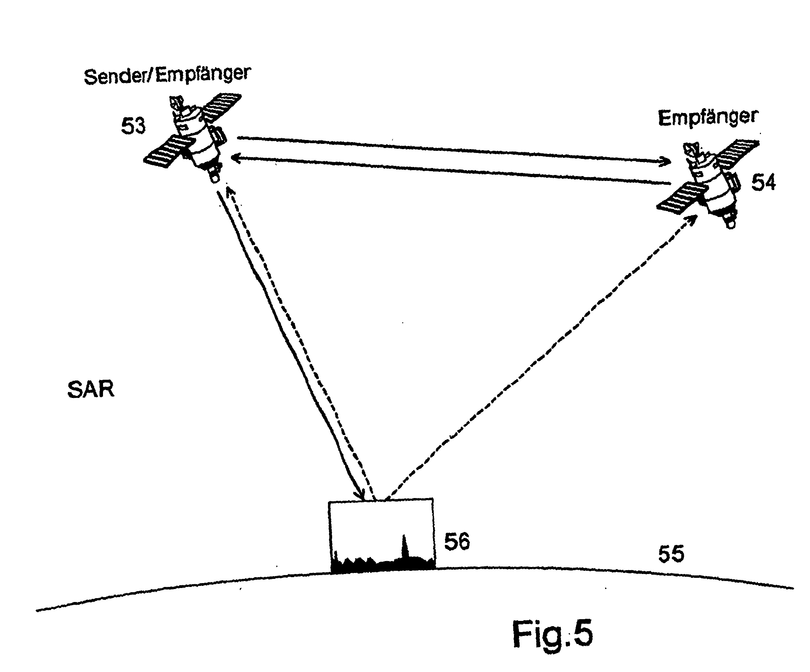

Die in Fig.5 gezeigte Konstellation unterscheidet sich von der Anordnung in Fig.3 dadurch, dass im bistatischen System im Orbit nicht zwei vollständige satellitengetragene Sender/Empfänger verwendet werden, sondern nur ein vollständiger Sender/Empfänger 53 und ein reiner Empfänger 54. Diese Ausführungsweise ist noch kostengünstiger als die in Fig.3 gezeigte, da in einem Duplikat des Satelliten der Sendeteil weggelassen werden kann. Bei dieser Konstellation sendet nur der satellitengetragene Sender/Empfänger 53, wogegen sowohl der Sender/Empfänger 53 als auch der ebenfalls satellitengetragene, reine Empfänger 54 die als Echosignale jeweils an der Erdoberfläche 55 im Bereich 56 reflektierten Signale des Sende/Empfängers 53 empfangen.

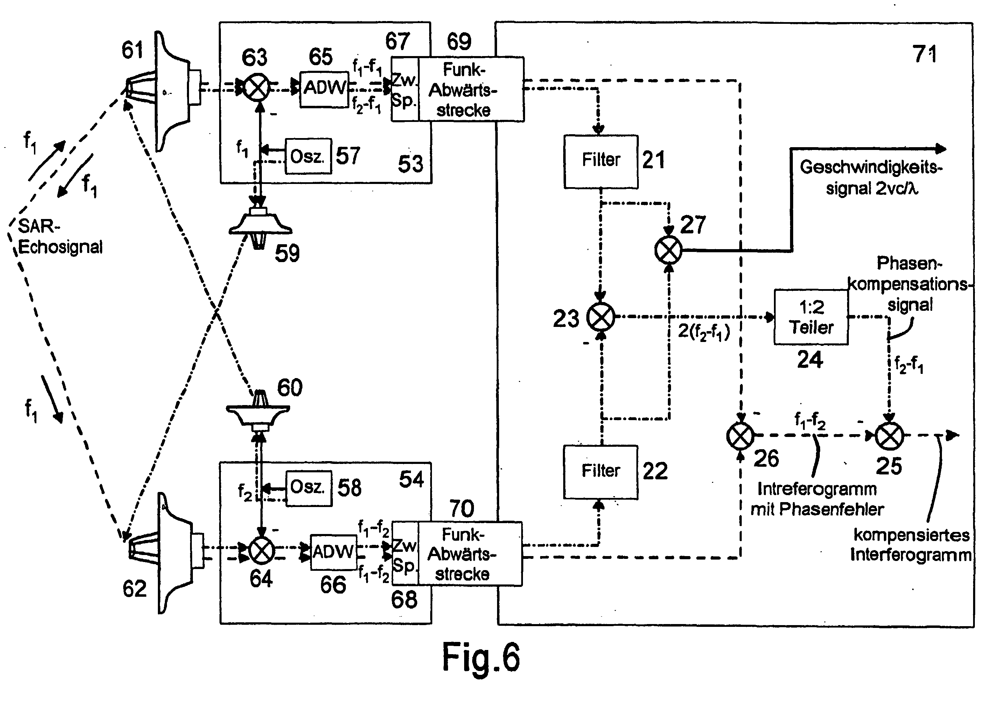

Wie im Einzelnen die zur Konstellation von Fig.5 gehörende Fig.6 in einem Blockschaltbild zeigt, werden beim Empfang im Sender/Empfänger 53 die auf den Reflexionen der ausgesendeten Mikrowellenimpulse seines eigenen Senders (Lokaloszillatorfrequenz des Senders ist f₁) beruhenden Echosignale kohärent mit der Frequenz f₁ seines eigenen Lokaloszillators 57 demoduliert. Dagegen werden beim Empfang im reinen Empfänger 54 die auf den Reflexionen der ausgesendeten Mikrowellenimpulse des Sender/Empfängers 53 beruhenden Echosignale kohärent mit der Frequenz f₂ des Lokaloszillators 58 des reinen Empfängers 54 demoduliert. Dadurch entsteht neben dem gewünschten Nutzsignal, nämlich der interferometrischen Phasenverschiebung, eine zusätzliche Phasenstörung, die durch die Differenz der Lokaloszillatorfrequenzen f₁ und f₂ hervorgerufen wird.

Am Sender/Empfänger 53 und am Empfänger 54 sind auch in diesem Ausführungsbeispiel kleine Sendeantennen 59 bzw. 60 angebracht, mit denen der Sender/Empfänger 53 und der Empfänger 54 ihre eigenen Lokaloszillatorfrequenzen f₁ bzw. f₂, die in den Lokaloszillatoren 57 bzw. 58 erzeugt werden, an den jeweils anderen Empfänger 54 bzw. 53 abstrahlen.

Diese empfangen die Frequenzen f₁ bzw. f₂ mit einer bereits vorhandenen Radarantenne 61 bzw. 62 oder mittels zweier in Fig.4 nicht dargestellter kleiner Zusatzantennen und demodulieren sie mit ihrer eigenen Lokaloszillatorfrequenz f₁ bzw. f₂. Dazu ist in jedem Empfänger 53 und 54 ein Demodulator-Mischer 63 bzw. 64 in den Hochfrequenz-Empfangszug eingeschaltet.

In dem in Fig.6 dargestellten Fall empfängt der reine Empfänger 54 das Lokaloszillatorsignal f₁ vom Empfänger 53 und demoduliert es mit der Frequenz f₂ seines eigenen Lokaloszillators 58. Es entsteht dadurch die Differenzfrequenz (f₁-f₂) der beiden Lokaloszillatoren 57 und 58. Im Empfänger des Sender/Empfängers 53 erfolgt der Vorgang genau spiegelbildlich, d.h. der Empfänger des Sender/Empfängers 53 empfängt das Lokaloszillatorsignal f₂ vom Empfänger 54 und demoduliert es mit der Frequenz f₁ seines eigenen Lokaloszillators 57. Es entsteht dadurch die Differenzfrequenz (f₂-f₁) der beiden Lokaloszillatoren 54 und 53. Nach der Mischung im Demodulator-Mischer 63 des Empfängers des Sender/Empfängers 53 bzw. nach der Mischung im Demodulator-Mischer 64 des reinen Empfängers 54 liegen also Differenzfrequenzen (f₁-f₁) und (f₂-f₁) im Empfänger des Sender/Empfängers 53 und Differenzfrequenzen (f₁-f₂) und (f₁-f₂) im reinen Empfänger 54 jeweils im Basisband vor und werden durch Analog/Digital-Wandler 65 bzw. 66 digitalisiert.

Nach einer Speicherung in einem Zwischenspeicher 67 bzw. 68 der digitalisierten gemischten Differenzfrequenzsignale der beiden Empfänger 53 und 54 erfolgt über eine Abwärts-Funkstrecke 69 bzw. 70 eine Funk-Übertragung dieser Signale zu einer ein Phasenkompensationssystem enthaltenden Auswertestation 71 am Boden. Dort werden die Phasenstörungen vollständig eliminiert.

Das in Fig.6 dargestellte Phasenkompensationssystem der Auswertestation 71 ist mit demjenigen der Auswertestation 20 in Fig.2 technisch identisch, so dass für die Komponenten die gleichen Bezugszeichen verwendet sind und diesbezüglich auf die Beschreibung der Fig.2 verwiesen wird.

Das Verfahren nach der Erfindung und Einrichtungen zu dessen Durchführung können in vorteilhafter Weise zur Erzeugung hochgenauer digitaler Höhenmodelle mit Hilfe bistatischer Radarsatelliten aus dem Weltraum verwendet werden. Mit Hilfe bistatischer Satelliten kann eine vollständige weltweite Abdeckung in einer neuen, gesteigerten Genauigkeitsklasse erzielt werden.

Das Verfahren nach der Erfindung und Einrichtungen zu dessen Durchführung ermöglichen auch eine genaue Messung der Meeresströmungen mit Hilfe bistatischer Radarsatelliten aus dem Weltraum. Die Beobachtung der Meeresströmungen ist für das Verständnis der klimarelevanten Vorgänge auf der Erde besonders wichtig.

Darüber hinaus können das beschriebene Verfahren nach der Erfindung und die Einrichtungen zu dessen Durchführung außer auf Satelliten auch in Flugzeugen angewandt werden und ermöglichen dabei eine hochauflösende dreidimensionale Erdbeobachtung für die Kartographie.

### Bezugszeichenliste

- 1: Sender
- 2, 3: Empfänger
- 4: Bereich der Erdoberfläche
- 5: Erdoberfläche, Boden
- 6, 7: Lokaloszillatoren
- 8, 9: Sendeantennen
- 10, 11: Radarantennen
- 12, 13: Demodulator-Mischer
- 14, 15: Analog/Digital-Wandler
- 16, 17: Zwischenspeicher
- 18, 19: Abwärts-Funkstrecke
- 20: Auswertestation mit Phasenkompensationssystem
- 21, 22: Filter
- 23: Demodulator-Mischer
- 24: 1:2-Frequenzteiler
- 25: Kompensationsmischer
- 26: Nutzsignal-Mischer
- 27: Demodulator-Mischer
- 28, 29: Sender/Empfänger
- 30: Erdoberfläche
- 31: Bereich der Erdoberfläche
- 32, 33: Lokaloszillatoren
- 34, 35: Sendeantennen
- 36, 37: Radarantennen
- 38, 39: Demodulator-Mischer
- 40, 41: Analog/Digital-Wandler
- 42, 43: Zwischenspeicher
- 44, 45: Abwärts-Funkstrecke
- 46: Auswertestation mit Phasenkompensationssystem
- 47, 48: Filter
- 49: Demodulator-Mischer
- 50: Kompensationsmischer
- 51: Nutzsignal-Mischer
- 52: Demodulator-Mischer
- 53: Sender/Empfänger
- 54: Empfänger
- 55: Erdoberfläche
- 56: Bereich der Erdoberfläche
- 57, 58: Lokaloszillatoren
- 59, 60: Sendeantennen
- 61, 62: Radarantennen
- 63, 64: Demodulator-Mischer
- 65, 66: Analog/Digital-Wandler
- 67, 68: Zwischenspeicher
- 69, 70: Abwärts-Funkstrecke
- 71: Auswertestation mit Phasenkompensationssystem
- d₀, d₁, d₂: Abstände
- d₂₁: Abstand zwischen Empfängern 2 und 3
- f₁, f₂: Lokaloszillatorfrequenzen

## Patentansprüche

1. Verfahren zur Kompensation von Phasenfehlern im Nutzsignal eines interferometrischen bi- oder multistatischen Synthetik-Apertur-Radarsystems (SAR), dessen von mindestens einem flugzeug- oder satellitengetragenen Sender ausgesendete Signale nach Reflexion am Boden von zwei oder mehr ebenfalls flugzeug- oder satellitengetragenen, voneinander räumlich getrennten Empfängern als Echosignale empfangen werden, die unter Verwendung jeweils eines Lokaloszillators pro Empfänger kohärent demoduliert und danach über Funk zu einer am Boden gelegenen Auswertestation übertragen werden, in der dann durch gegenseitige Demodulation der übertragenen Echosignale das interferometrische Nutzsignal abgeleitet wird, **dadurch gekennzeichnet, dass** von jedem der Empfänger (2, 3) dessen lokale Oszillatorfrequenz (f₁, f₂) über eine Sendeantenne (8, 9) an jeweils alle anderen Empfänger ausgesendet wird, dass in jedem der Empfänger die lokalen Oszillatorfrequenzen aller anderen Empfänger empfangen und kohärent unter Verwendung jeweils der eigenen Lokaloszillatorfrequenz zur Bildung von Differenzfrequenzsignalen demoduliert werden, dass von den Empfängern zusätzlich zu den jeweiligen demodulierten Echosignalen auch die bei ihnen gebildeten Differenzfrequenzsignale zu der Auswertestation (20) übertragen werden und dass in der Auswertestation die nach der Übertragung empfangenen Differenzfrequenzsignale der Empfänger gegenseitig demoduliert werden und jeweils ein Phasenfehlersignal ergeben, das zur Kompensation des Phasenfehlers des die gleichen Empfänger betreffenden interferometrischen Nutzsignals herangezogen wird.

2. Verfahren nach Anspruch 1, **dadurch gekennzeichnet, dass** in den Empfängern (2, 3) sowohl die jeweiligen, dort demodulierten Echosignale als auch die bei ihnen gebildeten Differenzfrequenzsignale vor ihrer Übertragung zu der am Boden befindliche Auswertestation (20) zwischengespeichert werden.

3. Verfahren nach Anspruch 2, **dadurch gekennzeichnet, dass** in einem Empfänger (2, 3) die Lokaloszillatorfrequenzen (f₁, f₂) der anderen Empfänger mit einer eigenen Antenne aufgenommen sowie getrennt von den Echosignalen dann demoduliert und zwischengespeichert und anschließend zur Auswertestation (20) übertragen werden.

4. Verfahren nach Anspruch 2, **dadurch gekennzeichnet, dass** in einem Empfänger (2, 3) die Lokaloszillatorfrequenzen (f₁, f₂) der anderen Empfänger zu den Echosignalen des eigenen Empfängers addiert werden und dann nach einer Demodulation zwischengespeichert werden und dass in der Auswertestation (20) vor der eigentlichen Phasenfehlerkompensation die Differenzfrequenzsignale und die demodulierten Echosignale durch Filterung (21, 22), vorzugsweise Softwarefilterung, rekonstruiert werden.

5. Verfahren nach einem der vorhergehenden Ansprüche, **dadurch gekennzeichnet, dass** die Lokaloszillatorfrequenzen (f₁, f₂) vor der Übertragung zur Auswertestation (20) geteilt oder heruntergemischt werden und dass in der Auswertestation vor der eigentlichen Phasenfehlerkompensation die dort bekannten Teilerfaktoren bzw. Mischfrequenzen wieder rückgängig gemacht werden.

6. Verfahren nach einem der vorhergehenden Ansprüche, **dadurch gekennzeichnet, dass** die sich durch eine Abstandsänderung zwischen zwei Empfängern (2, 3) ergebende und damit einer Geschwindigkeit entsprechende, zusätzliche Frequenz in den beiden Differenzfrequenzsignalen dieser beiden Empfänger bei der betreffenden Auswertung in der Auswertestation (20) vor der eigentlichen Phasenkompensation auf Grund der gegenseitigen Demodulation zwar entfällt, aber in der Auswertestation als weiteres Nutzsignal für eine spätere Verrechnung der interferometrischen Nutzsignale verwendet wird, da die Geschwindigkeit ein wichtiger Parameter für die Messung der sogenannten Basislinie, d.h. des Abstandes (d₂₁) der beiden betreffenden Empfänger, ist.

7. Verfahren nach einem der vorhergehenden Ansprüche, **dadurch gekennzeichnet, dass** im bi- oder multistatischen Synthetik-Apertur-Radarsystem (SAR) der Boden (5) über einen Bereich (4) mittels eines auf einem Flugzeug oder Satelliten angeordneten, nicht-kooperativen Senders (1) ausgeleuchtet wird und dass die Echosignale mittels auf verschiedenen anderen Flugzeugen oder anderen Satelliten angeordneten Empfängern (2, 3) empfangen werden.

8. Verfahren nach einem der Ansprüche 1 bis 6, **dadurch gekennzeichnet, dass** im bi- oder multistatischen Synthetik-Apertur-Radarsystem (SAR) der Boden (30) über einen Bereich (31) mittels der Sender von auf verschiedenen Flugzeugen oder Satelliten angeordneten Sender/Empfängern (28, 29) ausgeleuchtet wird und dass die Echosignale mittels der Empfänger dieser Sender/Empfänger empfangen werden und zwar derart, dass jeder Sender/Empfänger jeweils diejenigen Echosignale empfängt, die von den Sendesignalen anderer Sender/Empfänger herrühren.

9. Verfahren nach einem der Ansprüche 1 bis 6, **dadurch gekennzeichnet, dass** im bi- oder multistatischen Synthetik-Apertur-Radarsystem (SAR) der Boden (55) über einen Bereich (56) mittels eines kooperativen Senders eines auf einem Flugzeug oder Satelliten angeordneten Sender/Empfängers (53) ausgeleuchtet wird und dass die Echosignale mittels des Empfänger dieses Sender/Empfängers und einem oder mehreren jeweils auf einem anderen Flugzeug oder anderen Satelliten angeordneten reinen Empfänger/n (54) empfangen werden.

10. Verfahren nach einem der vorhergehenden Ansprüche, **dadurch gekennzeichnet, dass** die Empfänger (2, 3) ihre jeweilige Lokaloszillatorfrequenz (f₁, f₂) über eine zusätzliche Antenne (8, 9) ausstrahlen und dass sie die Lokaloszillatorfrequenzen (f₂, f₁) der jeweils anderen Empfänger über eine ohnehin vorhandene Radarantenne (10, 11) oder durch eine weitere zusätzliche Antenne empfangen.

11. Einrichtung zur Durchführung des Verfahrens nach einem der vorhergehenden Ansprüche, **dadurch gekennzeichnet, dass** die flugzeug- oder satellitengetragenen Empfänger (2, 3) des Synthetik-Apertur-Radarsystems (SAR) jeweils außer einer Radarantenne (10, 11) zum Empfang von Echosignalen und von Lokaloszillatorfrequenzen (f₁, f₂) eines oder mehrerer anderer Empfänger noch eine Antenne (8, 9) zum Ausstrahlen jeweils ihrer eigenen Lokaloszillatorfrequenz aufweisen, dass die Empfänger jeweils einen Demodulator-Mischer (12, 13) enthalten, dessen eines Eingangssignal zusammen das von der Radarantenne des betreffenden Empfängers aufgenommene Echosignal und die empfangene Lokaloszillatorfrequenz eines anderen Empfängers ist und dessen anderes Eingangssignal die Lokaloszillatorfrequenz des eigenen Empfängers ist, dass am Ausgang des Demodulator-Mischers jedes Empfängers ein Analog/DigitalWandler (14, 15) zum Digitalisieren der ins Basisband umgesetzte. Differenzfrequenzen einerseits zwischen der Echosignalfrequenz und der Lokaloszillatorfrequenz des betreffenden Empfängers und andererseits zwischen der über die zusätzliche Antenne übertragenen Lokaloszillatorfrequenz des anderen Empfängers und der Lokaloszillatorfrequenz des betreffenden Empfängers angeschlossen ist, dass in den Empfängern jeweils ein Zwischenspeicher (16, 17) zur Speicherung der digitalen Differenzfrequenzsignale und ein Funksender zur Aussendung der zwischengespeicherten Differenzfrequenzsignale zu einer auf dem Boden angeordneten Auswertestation (20) über eine Abwärts-Funkstrecke (18, 19) vorgesehen ist, dass die Auswertestation mit einem Funkempfänger zum Empfangen dieser über die Abwärts-Funkstrecke von den Empfängern übertragenen, digitalen Differenzfrequenzsignale ausgestattet ist, dass in einem Phasenfehler-Kompensationssystem der Auswertestation in jedem einem Empfänger zugeordneten Pfad ein Filter (21, 22) zum Ausfiltern des die Lokaloszillatorfrequenzen der Empfänger betreffenden Differenzfrequenzsignals vorgesehen ist, dass zwischen den Filtern zum Mischen der betreffenden Differenzfrequenzsignale mit seinen beiden Eingängen ein Demodulator-Mischer (23) angeordnet ist, dessen Ausgang mit einem Eingang eines Kompensationsmischers (25) verbunden ist, dessen anderer Eingang mit dem Ausgang eines Nutzsignal-Mischers (26) verbunden ist, dessen Eingänge zum Zuführen der Nutzsignalanteile jeweils an einen Pfad des Phasenfehler-Kompensationssystems vor den Filtern angeschlossen sind, und dass das Ausgangssignal des Kompensationsmischers das phasenfehlerkompensierte interferometrische Nutzsignal ist.

12. Einrichtung nach Anspruch 11, **dadurch gekennzeichnet, dass** zwischen den Filtern (21, 22) mit seinen beiden Eingängen noch ein weiterer Demodulator-Mischer (27) angeordnet ist, an dessen Ausgang ein Geschwindigkeitssignal ansteht, das die Geschwindigkeit der Abstandsänderung zweier Empfänger (2, 3) angibt.

13. Einrichtung nach Anspruch 11, **dadurch gekennzeichnet, dass** die Filter (21, 22) zum Ausfiltern des die Lokaloszillatorfrequenzen der Empfänger betreffenden Differenzfrequenzsignals Matched-Filter sind.

14. Einrichtung nach Anspruch 11, **dadurch gekennzeichnet, dass** vor den Eingängen des Nutzsignal-Mischers (26) als Filter zum Wegfiltern der die Lokaloszillatorfrequenzen der Empfänger betreffenden Differenzfrequenzsignale jeweils ein Notch-Filter vorgesehen ist.

15. Einrichtung nach einem der Ansprüche 11 bis 14, **dadurch gekennzeichnet, dass** die Filter (21, 22) Softwarefilter sind.

## Claims

1. A method for compensating phase errors in the useful signal of an interferometric bi/multistatic synthetic aperture radar (SAR) system whose signals beamed by at least one transmitter platformed on an aircraft or satellite are received, after ground reflection, by two or more spatially separated receivers likewise platformed on an aircraft or satellite as echo signals which in employing a local oscillator for each receiver are coherently demodulated and then wireless communicated to a ground station for analysis in which the interferometric useful signal is then derived by mutual demodulation of the communicated echo signals, **characterized in that** the local oscillator frequency (f₁, f₂) of each receiver (2, 3) is beamed via a transmitter antenna (8, 9) to each of the other receivers, that in each of said receivers the local oscillator frequencies of all other receivers are received and coherently demodulated in employing in each case the native local oscillator frequency for forming differential frequency signals, that from said receivers, in addition to each of the demodulated echo signals, also said differential frequency signals formed with them are communicated to said analysis station (20) and that in said analysis station said differential frequency signals received by communication from said receivers are mutually demodulated, resulting in a phase error signal which is employed to compensate the phase error of the interferometric useful signal relating to the same receivers.

2. The method as set forth in claim 1, **characterized in that** both each of said echo signals demodulated in said receivers (2. 3) and said differential frequency signals formed therewith are cached before being communicated to said analysis station (20).

3. The method as set forth in claim 2, **characterized in that** in a receiver (2, 3) said local oscillator frequencies (f₁, f₂) of the other receivers are mapped by an native antenna and then demodulated and cached separate from said echo signals before being communicated to said analysis station (20).

4. The method as set forth in claim 2, **characterized in that** in a receiver (2, 3) said local oscillator frequencies (f₁, f₂) of the other receivers are added to said echo signals of the native receiver and then cached after demodulation and that in said analysis station (20) before the actual phase error compensation said differential frequency signals and said demodulated echo signals are reconstructed by filtering (21, 22), preferably by software filtering.

5. The method as set forth in any of the preceding claims, **characterized in that** before communication to said analysis station (20) said local oscillator frequencies (f₁, f₂) are divided or mixed down and that in said analysis station before the actual phase error compensation the division factors and mix frequencies respectively as known therein are revoked.

6. The method as set forth in any of the preceding claims, **characterized in that** although the additional frequency materializing from a change in distance between two receivers (2, 3) and thus corresponding to a velocity in said two differential frequency signals of these two receivers is eliminated in the corresponding analysis in said analysis station (20) before the actual phase compensation because of said mutual demodulation, it is used in said analysis station as a further useful signal for later calculation of said interferometric useful signals, since said velocity is an important parameter for measuring said cited baseline, i.e. said distance (d₂₁) of the two receivers concerned.

7. The method as set forth in any of the preceding claims, **characterized in that** in said bi/multistatic synthetic aperture radar (SAR) system the ground (5) is beamed over an area (4) by means of a non-cooperative transmitter (1) platformed on an aircraft or satellite and said echo signals are then received by means of receivers (2, 3) platformed on various other aircraft or other satellites.

8. The method as set forth in any of the claims 1 to 6, **characterized in that** in said bi/multistatic synthetic aperture radar (SAR) system the ground (30) is beamed over an area (31) by means of the transmitters of said transceivers (28, 29) platformed on various aircraft or satellites and said echo signals received by means of the receivers of said transceivers such that each transceiver receives said echo signals in each case which stem from said transmitter signals of other transceivers.

9. The method as set forth in any of the claims 1 to 6, **characterized in that** in said bi/multistatic synthetic aperture radar (SAR) system the ground (55) is beamed over an area (56) by means of a cooperative transmitter of a transceiver (53) platformed on an aircraft or satellite and that said echo signals are received by means of the receiver of said transceiver and one or more lone receiver(s) (54) each platformed on another aircraft or another satellite.

10. The method as set forth in any of the preceding claims, **characterized in that** each receiver (2, 3) beams its local oscillator frequency (f₁, f₂) via an additional antenna (8, 9) and receives the local oscillator frequency (f₂, f₁) of each other receiver via a radar antenna (10, 11) available in any case or via a further additional antenna.

11. A means for implementing the method as set forth in any of the preceding claims, **characterized in that** each of said receivers (2, 3) in said synthetic aperture radar (SAR) system platformed on an aircraft or satellite comprises, in addition to a radar antenna (10, 11) for receiving echo signals and said local oscillator frequencies (f₁, f₂) of one or more other receivers, an antenna (8, 9) for beaming its native local oscillator frequency in each case, that each receiver includes a demodulator mixer (12, 13) whose one input signal is said echo signal mapped by said radar antenna of said corresponding receiver together with said received local oscillator frequency of another receiver and whose other input signal is said local oscillator frequency of its native receiver, that connected to the output of said demodulator mixer of each receiver is an analog/digital converter (14, 15) for digitizing said baseband converted differential frequencies, on the one hand, between said echo signal frequency and said local oscillator frequency of said corresponding receiver and, on the other, between said local oscillator frequency of said other receiver communicated via said additional antenna and said local oscillator frequency of said corresponding receiver, that provided in each receiver is a cache (16, 17) for storing said digital differential frequency signals and a wireless transmitter for emitting said cached differential frequency signals to a ground station for analysis (20) via a downlink (18, 19), that said analysis station is provided with a wireless receiver for receiving said digital differential frequency signals communicated via said downlink to said receivers, that in a phase error compensation system of said analysis station in each path assigned to a receiver a filter (21, 22) is provided for filtering out the differential frequency signal corresponding to said local oscillator frequencies of said receivers, that between the filters for mixing said corresponding differential frequency signals with its two inputs a demodulator mixer (23) is disposed, whose output is connected to an input of a compensation mixer (25), whose other input is connected to the output of a useful signal mixer (26), whose inputs are connected, for supplying each of the useful signal components, to each path of the phase error compensation system upstream of the filters, and that said output signal of said compensation mixer is said phase error compensated interferometric useful signal.

12. The means as set forth in claim 11, **characterized in that** disposed between the filters (21, 22) with its two inputs is a further demodulator mixer (27), at the output of which a velocity signal is available indicating the velocity of the change in distance of said two receivers (2, 3).

13. The means as set forth in claim 11, **characterized in that** said filters (21, 22) for filtering out said differential frequencies corresponding to said local oscillator frequencies of said receivers are matched filters.

14. The means as set forth in claim 11, **characterized in that** a notch filter is provided upstream of each input of said useful signal mixer (26) as a filter for filtering off said differential frequency signals corresponding to said local oscillator frequencies of said receivers.

15. The means as set forth in any of the claims 11 to 14, **characterized in that** said filters (21, 22) are software filters.

## Revendications

1. Procédé pour compenser des erreurs de phase dans un signal utile d'un système de radar interférométrique à ouverture synthétique (SAR) bistatique ou multistatique, dont les signaux, émis par au moins un émetteur porté par un avion ou par un satellite, sont reçus après réflexion au sol, par deux ou plus de deux récepteurs séparés spatialement l'un de l'autre et également portés par un avion ou par un satellite, en tant que signaux d'échos, qui sont démodulés de façon cohérente moyennant l'utilisation respectivement d'un oscillateur local pour chaque récepteur, et sont transmis ensuite par radio à une station d'évaluation installée au sol, dans laquelle alors le signal interférométrique utile est obtenu par démodulation réciproque des signaux d'échos transmis, **caractérisé en ce que** chacun des récepteurs (2,3) émet sa fréquence locale d'oscillateur (f₁,f₂) par l'intermédiaire d'une antenne d'émission (8,9) vers respectivement tous les autres récepteurs, que dans chacun des récepteurs, les fréquences locales d'oscillateur de tous les récepteurs sont reçues et sont démodulées d'une manière cohérente moyennant l'utilisation respectivement de la fréquence de l'oscillateur locale propre pour la formation de signaux à fréquence différentielle, que les récepteurs transmettent en plus des signaux d'échos respectivement démodulés, également les signaux à fréquence différentielle, formés dans ces récepteurs, à la station d'évaluation (20) et que dans la station d'évaluation, les signaux à fréquence différentielle, reçus après la transmission, des récepteurs sont démodulés réciproquement et fournissent respectivement un signal d'erreur de phase qui est utilisé pour la compensation de l'erreur de phase du signal interférométrique utile concernant les mêmes récepteurs.

2. Procédé selon la revendication 1, **caractérisé en ce que** dans les récepteurs (2,3), aussi bien les signaux d'échos respectifs, qui sont démodulés dans ces récepteurs, que les signaux à fréquence différentielle, formés dans ces récepteurs, sont mémorisés temporairement avant leur transmission à la station d'évaluation (20) située au sol.

3. Procédé selon la revendication 2, **caractérisé en ce que** dans un récepteur (2,3), les fréquences d'oscillateur locales (f₁,f₂) des autres récepteurs sont reçues par l'intermédiaire d'une antenne propre et sont ensuite démodulées séparément des signaux d'échos et mémorisées temporairement et sont ensuite transmises à la station d'évaluation (20).

4. Procédé selon la revendication 2, **caractérisé en ce que** dans un récepteur (2,3), les fréquences d'oscillateur locales (f₁,f₂) des autres récepteurs sont ajoutées aux signaux d'échos du récepteur propre et sont ensuite mémorisées temporairement après une démodulation et que dans la station d'évaluation (20), les signaux de fréquence différentielle et les signaux d'échos démodulés sont reconstitués par filtrage (21,22), de préférence par filtrage logiciel, avant la compensation proprement dite de l'erreur de phase.

5. Procédé selon l'une des revendications précédentes, **caractérisé en ce que** les fréquences d'oscillateur locales (f₁,f₂) sont divisées ou mélangées avant la transmission à la station d'évaluation (20) et que dans la station d'évaluation, les facteurs de division ou les fréquences de mélange, qui sont connus dans cette station, sont à nouveau annulés avant la compensation proprement dite de l'erreur de phase.

6. Procédé selon l'une des revendications précédentes, **caractérisé en ce que** la fréquence supplémentaire, qui est obtenue au moyen d'une modification de distance entre deux récepteurs (2,3) et correspond par conséquent à une vitesse, est supprimée lors de l'évaluation considérée dans la station d'évaluation (20) avant la compensation de phase proprement dite, sur la base de la démodulation réciproque, mais est utilisée dans la station d'évaluation en tant qu'autre signal utile pour un calcul ultérieur des signaux interférométriques utiles, étant donné que la vitesse est un paramètre important pour la mesure de ce qu'on appelle la ligne de base, c'est-à-dire la distance (d₂₁) des deux récepteurs concernés.

7. Procédé selon l'une des revendications précédentes, **caractérisé en ce que** dans le système de radar à ouverture synthétique (SAR) bistatique ou multistatique, le sol (5) est éclairé sur une zone (4) à l'aide d'un émetteur non coopératif (1), qui est disposé dans un avion ou dans un satellite, et que les signaux d'échos sont reçus à l'aide de récepteurs (2,3) disposés dans d'autres avions différents ou dans d'autres satellites différents.

8. Procédé selon l'une des revendications 1 à 6, **caractérisé en ce que** dans le système de radar à ouverture synthétique (SAR) bistatique ou multistatique, le sol (3) est éclairé sur une zone (31) au moyen d'émetteurs / récepteurs (28/29) disposés dans différents avions ou satellites, et que les signaux d'échos sont reçus à l'aide des récepteurs de ces émetteurs/récepteurs et ce de telle sorte que chaque émetteur/ récepteur reçoit respectivement les signaux d'échos, qui proviennent des signaux d'émission d'autres émetteurs/récepteurs.

9. Procédé selon l'une des revendications 1 à 6, **caractérisé en ce que** dans le système de radar à ouverture synthétique (SAR) bistatique ou multistatique, le sol (55) est éclairé sur une zone (56) à l'aide d'un émetteur coopératif d'un émetteur/récepteur (53) disposé dans un avion ou un satellite, et que les signaux d'échos sont reçus au moyen du récepteur de cet émetteur/récepteur et d'un ou de plusieurs purs récepteurs (54), disposés respectivement dans un autre avion ou dans un autre satellite.

10. Procédé selon l'une des revendications précédentes, **caractérisé en ce que** les récepteurs (2,3) émettent leur fréquence d'oscillateur locale respective (f₁,f₂) par l'intermédiaire d'une antenne supplémentaire (8,9) et qu'ils reçoivent des fréquences d'oscillateur locales (f₂,f₁) des autres récepteurs respectifs par l'intermédiaire d'une antenne radar présente (10,11) ou par une autre antenne supplémentaire.

11. Dispositif pour la mise en oeuvre du procédé selon l'une des revendications précédentes, **caractérisé en ce que** les récepteurs (2,3), portés par un avion ou un satellite, du système de radar à ouverture synthétique (SAR) possèdent respectivement, en dehors d'une antenne radar (10,11) pour la réception de signaux d'échos et de fréquences d'oscillateur locales (f₁,f₂) d'un ou de plusieurs autres récepteurs, également une antenne (8,9) pour émettre respectivement leur propre fréquence d'oscillateur locale, que les récepteurs contiennent chacun un démodulateur-mélangeur (12,13), dont un signal d'entrée est conjointement le signal d'écho reçu par l'antenne radar du récepteur considéré et la fréquence d'oscillateur local reçue d'un autre récepteur et dont l'autre signal d'entrée est la fréquence d'oscillateur locale du récepteur propre, qu'à la sortie du démodulateur-mélangeur de chaque récepteur est raccordé un convertisseur analogique/numérique (14,15) servant à numériser les fréquences différentielles amenées par conversion dans la bande de base, d'une part entre la fréquence du signal d'écho et la fréquence d'oscillateur locale du récepteur considéré et d'autre part entre la fréquence d'oscillateur locale transmise par l'intermédiaire de l'antenne supplémentaire, de l'autre récepteur et la fréquence d'oscillateur locale du récepteur considéré, que dans les récepteurs, il est prévu respectivement une mémoire intermédiaire (16,17) pour mémoriser les signaux numériques de fréquence différentielle et un émetteur radio pour l'émission de signaux de fréquence différentielle mémorisés temporairement à une station d'évaluation (20) disposée au sol par l'intermédiaire d'une section de liaison radio descendante (18,19), que la station d'évaluation est équipée d'un récepteur radio pour la réception de ces signaux numériques de fréquence différentielle, qui sont transmis par l'intermédiaire de la section de liaison radio descendante à partir des récepteurs, que dans un système de compensation d'erreur de phase de la station d'évaluation, dans chaque voie associée à un récepteur, il est prévu un filtre (21,22) servant à séparer par filtrage le signal de fréquence différentielle concernant les fréquences d'oscillateur local des récepteurs, qu'entre les filtres pour le mélange des signaux de fréquence différentielle considérés est disposé, avec ses deux entrées, un démodulateur-mélangeur (23), dont la sortie est reliée à une entrée d'un mélangeur de compensation (25), dont l'autre entrée est reliée à la sortie d'un mélangeur de signal utile (26), dont les entrées sont raccordées pour l'envoi des composantes de signal utile respectivement à une voie du système de compensation d'erreur de phase en amont des filtres, et que le signal de sortie du mélangeur de compensation est le signal interférométrique utile, dont l'erreur de phase est compensée.

12. Dispositif selon la revendication 11, **caractérisé en ce qu'**entre les filtres (21,22) est en outre disposé, avec ses deux entrées, un autre démodulateur-mélangeur (27), à la sortie duquel est présent un signal de vitesse, qui indique la vitesse de la variation de la distance de deux récepteurs (2,3).

13. Dispositif selon la revendication 11, **caractérisé en ce que** les filtres (21,22) sont utilisés pour séparer par filtrage le signal de fréquence différentielle concernant les fréquences d'oscillateur local des récepteurs, sont des matched-filters, c'est-à-dire des filtres adaptés.

14. Dispositif selon la revendication 11, **caractérisé en ce qu'**en amont des entrées du mélangeur (26) du signal utile est prévu respectivement un notch-filter, c'est-à-dire un filtre à encoches, en tant que filtre pour séparer par filtrage les signaux de fréquence différentielle concernant les fréquences d'oscillateur local des récepteurs.

15. Dispositif selon l'une des revendications 11 à 14, **caractérisé en ce que** les filtres (21,22) sont des filtres logiciels.
